(19) Europäisches Patentamt
European Patent Office
Office européen des brevets

(11) Veröffentlichungsnummer: **0 532 992 A2**

(12) **EUROPÄISCHE PATENTANMELDUNG**

(21) Anmeldenummer: **92115138.7**

(51) Int. Cl.5: **F16D 3/205**

(22) Anmeldetag: **04.09.92**

(30) Priorität: **18.09.91 DE 4130963**

(43) Veröffentlichungstag der Anmeldung:
**24.03.93 Patentblatt 93/12**

(84) Benannte Vertragsstaaten:
**DE ES FR GB IT**

(71) Anmelder: **Löhr & Bromkamp Gesellschaft mit beschränkter Haftung**
**Carl-Legien-Str. 10**
**W-6050 Offenbach/Main 1(DE)**

(72) Erfinder: **Welschof, Hans-Heinrich**
**Im Lochseif 68a**
**W-6459 Rodenbach(DE)**
Erfinder: **Schwärzler, Peter**
**Enzlinger Berg 43**
**W-8752 Glattbach(DE)**
Erfinder: **Ricks, Michael**
**Friedrich-Ebert-Strasse 10**
**W-6368 Bad Vilbel(DE)**
Erfinder: **Hofmann, Norbert**
**Schlesienstrasse 3**
**W-6054 Rodgau 6(DE)**
Erfinder: **John, Friedhelm**
**Mellenseestrasse 33c**
**W-6450 Hanau-Steinheim(DE)**
Erfinder: **Wormsbächer, Hans**
**Breslauer Strasse 40**
**W-6072 Dreieich(DE)**
Erfinder: **Burghardt, Dieter**
**Diltheystrasse 6**
**W-6200 Wiesbaden-Biebrich(DE)**

(74) Vertreter: **Neumann, Ernst Dieter, Dipl.-Ing. et al**
**HARWARDT NEUMANN PATENTANWÄLTE**
**Scheerengasse 2 Postfach 1455**
**W-5200 Siegburg (DE)**

(54) **Tripodegelenk.**

(57) Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen, wobei die Abstützmittel durch einen Eingriff der Rolle in eine Führungsnut im Gelenkaußenteil gebildet werden, deren Tiefe so bemessen ist, daß die an der Rolle wirksame axiale Führungslänge $2 \cdot F_1$ in der Führungsnut zumindest der Hälfte des Rollendurchmessers $2 \cdot R_1$ entspricht. ($F_1 \geq 0{,}5\ R_1$)

Fig. 4a

$2 \cdot F_1 \geq R_1$

## Fig.4b

$R_2 \geq R_1$

$R_3 \leq 0,05\, R_1$

$0 < x \leq 0,5\, S_1$

## Fig.4c

$R_2 \geq R_1$

$R_3 \leq 0,05\, R_1$

$0 < x \leq 0,5\, S_1$

Die Erfindung betrifft ein Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteiles eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet sind und wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen.

Tripodegelenke dieser Art sind in verschiedenen Ausgestaltungen bekannt, für die beispielhaft die DE 28 31 044 (Honda), die DE 39 36 601 (GKN) und die DE 37 16 962 (NTN) angegeben werden können. Bei den beiden erstgenannten ist jeweils die Rolle, insbesondere mittels eines Nadellagers auf einem Rollenträger drehbar gelagert, wobei der Rollenträger auf dem Zapfen axial verschiebbar und schwenkbar zur Zapfenachse angeordnet ist.

Beim ersten Typ ist dies mittels eines Innenrings bewerkstelligt, der mit einer kugeligen Außenfläche in eine zumindest teilweise innenkugelige Innenfläche des Rollenträgers eingreift, wobei der Innenring innenzylindrisch ist und auf einem Zylinderzapfen geführt ist.

Im zweiten Fall ist der Rollenträger mit einer innenzylindrischen Innenöffnung versehen, in die ein am äußeren Ende teilkugeliger Zapfen radial verschiebbar und schwenkbar eingreift.

Die dritte Ausführung weist anstelle eines Rollenträgers im eigentlichen Sinne eine Innenrolle auf, die unmittelbar auf einem zylindrischen Zapfen drehbar, insbesondere mittels eines Nadellagers gelagert ist und die außenkugelig ist. Diese Innenrolle greift in eine innenzylindrische Ausnehmung der Rolle axial verschiebbar und schwenkbar zur Zapfenachse ein.

Mit dem Begriff "Elemente der Rollenanordnung" werden zusammenfassend insbesondere Rollenträger bzw. Innenrolle und Rolle selber bezeichnet, wobei als nichtdrehende Elemente der Rollenanordnung nur die beiden Rollenträger der beiden ersten Gelenktypen anzusehen sind. Mit "Rollenträgermitteln" werden nachstehend somit alle Teile der "Rollenanordnung" mit Ausnahme der "Rolle" selber bezeichnet.

Bei gebeugt umlaufendem Gelenk ergeben sich relativ betrachtet - auf das Gelenkinnenteil bezogen - radial oszillierende Bewegungen der Rollen zur Gelenkachse und schwenkende Bewegungen der Rollen auf den Zapfen und gleichzeitig - auf das Gelenkaußenteil bezogen - längsgerichtete oszillierende Rollbewegungen der Rollen entlang den Bahnen. Die erstgenannten Radial- und Schwenkbewegungen sind gleitreibungsbehaftet, während die zweitgenannten Rollbewegungen überwiegend als Abwälzbewegungen auftreten. Aufgrund der genannten Reibungskräfte zeigen die bekannten Tripodegelenke bei wachsendem Gelenkbeugewinkel eine Zunahme der Gelenkanregungskräfte, d. h. der im Gelenk erzeugten, auf den Antriebsstrang übertragenen Wechselkräfte. Insbesondere wenn sich ein Zapfen infolge der Bewegungsabläufe bei gebeugt umlaufenden Gelenk gegenüber der entsprechenden Rolle bezogen auf das Gelenkaußenteil radial nach innen verlagert und die Rolle sich gegenüber dem Gelenkaußenteil radial nach innen abstützen muß, sind die Gleitreibungskräfte besonders hoch und von Nachteil. Dies gilt insbesondere für die durch Kippmomente um tangential zum Umfang verlaufende Achsen an den Rollenanordnungen verursachte Abstützkräfte.

Der vorliegenden Erfindung liegt die Aufgabe zugrunde, Gelenke der genannten Art, die insbesondere die drei speziell genannten Bauarten einschließen, so auszugestalten, daß die Rollenführung in den Bahnen, insbesondere gegenüber den genannten Kippmomenten besonders reibungsarm ist, um die Gelenkanregungskräfte zu vermindern.

Lösungen hierfür bestehen in den Gelenkbauformen gemäß den unabhängigen Patentansprüchen. Hierbei sind in vorteilhafter Weise entweder die wirksamen Flächen zwischen den Elementen der Rollenanordnung und dem Gelenkaußenteil besonders groß ausgebildet oder die wirksamen Flächen des jeweiligen Rollenelementes über den Abrolldurchmesser der Rolle hinaus radial vergrößert. Die radialen Abstützflächen können dabei zwischen der sich drehenden Rolle oder den sich nicht drehenden Elementen der Rollenanordnung einerseits und dem Gelenkaußenteil andererseits ausgebildet werden. Den Lösungen liegt der Gedanke zugrunde, daß eine Reibkräftereduzierung erfolgt, wenn die Normalkräfte in den Kontaktpunkten der Abstützmittel gesenkt werden. Hierzu ist bevorzugt vorgesehen, daß die bei der Führung der Rolle, d. h. zu ihrer Abstützung gegenüber Kippmomenten wirksamen Flächen, im wesentlichen parallel zur tangentialen Richtung der Kraftübertragung zwischen der Rolle und dem Gelenkaußenteil bei Drehmomenteinleitung in das Gelenk liegen. Dies ist gleichbedeutend mit der Umschreibung, daß die für die Führung der Rolle, d. h. für die radiale Abstützung der Rollenanordnung gegenüber Kippmomenten wirksamen Flächen im wesentlichen senkrecht zu radialen Abstützkräften liegen. Die von den Führungsmitteln bzw. Führungsflächen aufzunehmenden Kräfte entstehen dabei aus einer Überlagerung der bezogen auf das Gelenkaußenteil rein radialen Kräfte verursacht durch die oszillierende Zapfenbewegung sowie der Kippmomente an den Rollen, verursacht durch die taumelnde Zapfenbewegung relativ zu den Rollen bei gebeugt umlaufenden Gelenk. Die zur Übertragung der eingeleiteten Drehmomente dienenden Flächen sollen hierbei von Kräften infolge der Rollenführung, d. h. Kräften aufgrund der Kippmomente freigehalten werden. Bezogen auf die Rolle sind diese Flächen vorzugsweise aus Kostengründen rein zylindrisch.

Eine erste erfindungsgemäße Lösung geht dahin, daß die Rolle in an sich üblicher Weise in eine Führungsbahn oder -nut eintaucht, wobei die Tiefe der Führungsnut so bemessen ist, daß die wirksame Führungslänge zumindest der Hälfte des Rollendurchmessers entspricht. Das bedeutet, daß die Tiefe der Führungsnut im Gelenkaußenteil zumindest das (1 - cos 30°)-fache des Rollendurchmessers beträgt. Durch die große wirksame Abstützfläche ergeben sich geringe Normalkräfte, so daß die Reibung verringert wird. Besonders bevorzugt ist diese Lösung in Anwendung auf eine Rolle mit rein zylindrischer Abrolloberfläche. Wie auch bei den nachfolgend erläuterten Ausgestaltungen kann dabei im Querschnitt durch das Gelenk zumindest eine der aneinanderliegenden Flächen der Rolle bzw. der Bahn gerundet sein, wobei die Einlaufbögen im Querschnitt Kreisbögen, Parabeln, Hyperbeln oder Elipsen folgen können.

Nach einer zweiten erfindungsgemäßen Lösung ist vorgesehen, daß die Abstützmittel durch einen Eingriff eines längsverlaufenden Führungssteges im Gelenkaußenteil in eine Ringnut in der Rolle gebildet wird. Bevorzugt hat hierbei der Führungssteg auch bei unter Drehmomenteinleitung belasteter Bahn radiales Spiel zur Rollenachse d. h. Abstand gegenüber dem Grund der Ringnut. Bevorzugte Formen der aneinander anliegenden Flanken der Bahn bzw. der Rolle im Querschnitt durch das Gelenk entsprechen den beim vorher genannten Ausführungsbeispiel erläuterten.

Nach einer dritten erfindungsgemäßen Lösung können die Abstützmittel durch eine radial über die Lauffläche der Rolle hinausstehende Führungsschulter der Rolle oder eines Rollenträgers in eine Führungsnut im Gelenkaußenteil gebildet werden. Die Schulter kann stirnseitig an der Rolle oder in Umkehrung der vorher genannten Lösung mittig an der Rolle vorgesehen sein. Bei Doppelrollen kann auch der Rollenträger eine Schulter in mittiger Lage zwischen den Rollen aufweisen.

Die genannten Schultern sind in Bezug zu den Führungsnuten jeweils so auszubilden, daß sie bei Drehmomenteinleitung auch an der belasteten Bahn radiales Spiel d. h. Abstand gegenüber dem jeweiligen Grund der Führungsnut haben. Bevorzugte Formen der aneinander anliegenden Flanken der Bahn bzw. der Rolle im Querschnitt durch das Gelenk entsprechen den beim vorher genannten Ausführungsbeispiel erläuterten.

Bei Ausbildung der Führungsschulter an der Rolle selber muß diese in radialer Draufsicht auf die Rolle selbstverständlich konzentrisch und rund sein. Bei Ausbildung der genannten Führungsschulter an einem nicht rotierenden Teil der Rollenanordnung, d. h. also an einem Rollenträger, kann diese in axialer Draufsicht auf die Rollenanordnung im Bereich des Nuteingriffs auch linear sein, um vergrößerte Hebelarme in Bezug auf die Kippmomente zu bilden, um die Normalkräfte zu reduzieren.

Zur Darstellung der Führungsstege oder Führungsschulter an Teilen der Rollenanordnung sind Blechelemente geeignet, die angeklemmt, angeschweißt oder mit Sicherungsringen z. B. am Rollenträger festgelegt sein können.

Die Führungsbahnen oder -nuten nuten können unmittelbar im Gelenkaußenteil oder unter Teilnahme von zusätzlichen Blechelementen am Gelenkaußenteil geformt werden.

Gemäß einer weiteren Lösung ist es möglich, die Führungsnut im Gelenkaußenteil und entsprechende Führungsstege oder Führungsschultern an Teilen der Rollenanordnung nur einseitig auf der bei Drehmomenteinleitung belasteten Bahn des Gelenkaußenteils vorzusehen.

Die Gefahr eines Verklemmens oder Verhakens unter dem Einfluß der zuvor genannten Kippmomente um die genannte Querachse kann dadurch weitgehend vermieden werden.

Nach einer weiteren Lösung ist es möglich, die auf die Rollenanordnung einwirkenden ersten Führungsnuten und Führungsstege von der Belastung durch Kippmomente um eine mit Abstand senkrecht zur Gelenkachse liegende Achse Q dadurch zu entlasten, daß im Gelenkaußenteil insbesondere radial außerhalb der Rollenanordnung zweite Abstützkanten oder Abstützführungen vorgesehen sind, die bevorzugt mit äußeren Stirnflächen der Rollenanordnung zusammenwirken.

Die verschiedenen Abstützmittel können entweder auf das gleiche Element der Rollanordnung oder zum einen auf die Rolle und zum anderen auf den Rollenträger einwirken.

Eine weitere Lösung geht dahin, daß ergänzend zur Rollenabstützung über feste Abstützmittel oder Abstützkanten federnde Abstützmittel radial innen an der Rollenanordnung vorgesehen sind, die sich ihrerseits gegenüber dem Gelenkinnenteil abstützen.

Mit den zuvor genannten Mitteln soll verhindert werden, daß die Abwälzbewegungen der Rolle gegenüber den Bahnen im Gelenkaußenteil durch Gleitreibungskräfte zwischen Rolle und Bahn beeinträchtigt werden, wodurch sich die Gelenkanregungskräfte erhöhen würden.

Andere Lösungen sind dadurch gekennzeichnet, daß Rollen mit zylindrischer Lauffläche in Führungsbahnen gehalten sind, von denen jeweils ausschließlich die auf der bei Drehmomenteinleitung belasteten Seite der Ausnehmungen mit konvexer Lauffläche ausgeführt ist oder daß Rollen mit balliger Lauffläche in Führungsbahnen gehalten sind, von denen zumindest die auf der bei Drehmomenteinleitung belasteten Seite der Ausnehmungen mit ebener oder konvexer Lauffläche ausgeführt ist oder daß Rollen mit balliger Lauffläche vorgesehen sind, wobei der Krümmungsradius der Lauffläche im Querschnitt durch das Gelenk zumindest dem Rollendurchmesser entspricht. Hierdurch ist jeweils das Entstehen von Gleitreibungskräften im Bereich der Bahnen reduziert bzw. verhindert und auf den Bereich der Führungsschultern beschränkt. Vorzugsweise ist hierbei die Eingriffstiefe gemäß dem ersten Lösungsvorschlag zu wahren.

Nach einer weiteren Lösung kann vorgesehen werden, daß die Rolle benachbart zur eigentlichen Lauffläche zumindest eine äußere Stirnradverzahnung aufweist und daß an der unter Drehmomenteinleitung in üblicher Drehrichtung belasteten Bahn zumindest eine in Längsrichtung verlaufende Zahnstangenausbildung im Gelenkaußenteil vorgesehen ist, in die die Stirnradverzahnung der Rolle eingreift.

Hiermit ist ein reines Abwälzen der Rolle in der Bahn zwangsweise sichergestellt, so daß Gleitreibungskräfte in den Bahnen auch hier vermieden werden. Die Wirkung einer derartigen verzahnten Rollen- und Bahnausbildung tritt in gewünschter Weise bei jeglicher Führung der Rolle in ihrer Bahn auf, mit der eine im wesentlichen zu sich parallele Lage der Rolle sichergestellt werden kann, d. h. auch bei im Prinzip abweichender Ausführung von den vorgenannten Einzelheiten der Abstützmittel.

Bevorzugte Ausgestaltungen der Erfindung sind anhand der Zeichnungen nachstehend dargestellt.

Fig. 1　　zeigt ein gattungsgemäßes Gelenk nach dem Stand der Technik in einer ersten Bauart;

Fig. 2　　zeigt ein gattungsgemäßes Gelenk nach dem Stand der Technik in einer zweiten Bauart;

Fig. 3　　zeigt ein gattungsgemäßes Gelenk nach dem Stand der Technik in einer dritten Bauart;

Fig. 4　　zeigt eine Rolle im Eingriff in eine Führungsnut in zwei Ausführungen;

Fig. 5　　zeigt eine Rolle im Eingriff mit einer Führungsnut in verschiedenen Ausführungen;

Fig. 6　　zeigt ein erfindungsgemäßes Gelenk im Halbschnitt in einer weiteren Ausführung;

Fig. 7　　zeigt ein erfindungsgemäßes Gelenk im Halbschnitt in einer weiteren Ausführung;

Fig. 8　　zeigt ein erfindungsgemäßes Gelenk im Halbschnitt in einer weiteren Ausführung;

Fig. 9　　zeigt ein erfindungsgemäßes Gelenk im Halbschnitt in einer weiteren Ausführung;

Fig. 10　　zeigt ein erfindungsgemäßes Gelenk im Halbschnitt in einer weiteren Ausführung;

Fig. 11　　zeigt ein erfindungsgemäßes Gelenk im Halbschnitt in einer weiteren Ausführung;

Fig. 12　　zeigt ein erfindungsgemäßes Gelenk im Halbschnitt in einer weiteren Ausführung;

Fig. 13　　zeigt ein erfindungsgemäßes Gelenk im Halbschnitt in einer weiteren Ausführung;

Fig. 14　　zeigt ein erfindungsgemäßes Gelenk im Halbschnitt in einer weiteren Ausführung;

Fig. 15　　zeigt ein erfindungsgemäßes Gelenk im Halbschnitt in einer weiteren Ausführung;

Fig. 16　　zeigt ein erfindungsgemäßes Gelenk im Halbschnitt in einer weiteren Ausführung;

Fig. 17　　zeigt ein erfindungsgemäßes Gelenk im Halbschnitt in einer weiteren Ausführung;

Fig. 18　　zeigt ein erfindungsgemäßes Gelenk im Halbschnitt in einer weiteren Ausführung;

Fig. 19　　zeigt Rollen- und Bahnformen in verschiedenen Ausführungen;

Fig. 20　　zeigt eine Rolle mit Verzahnungsbereichen.

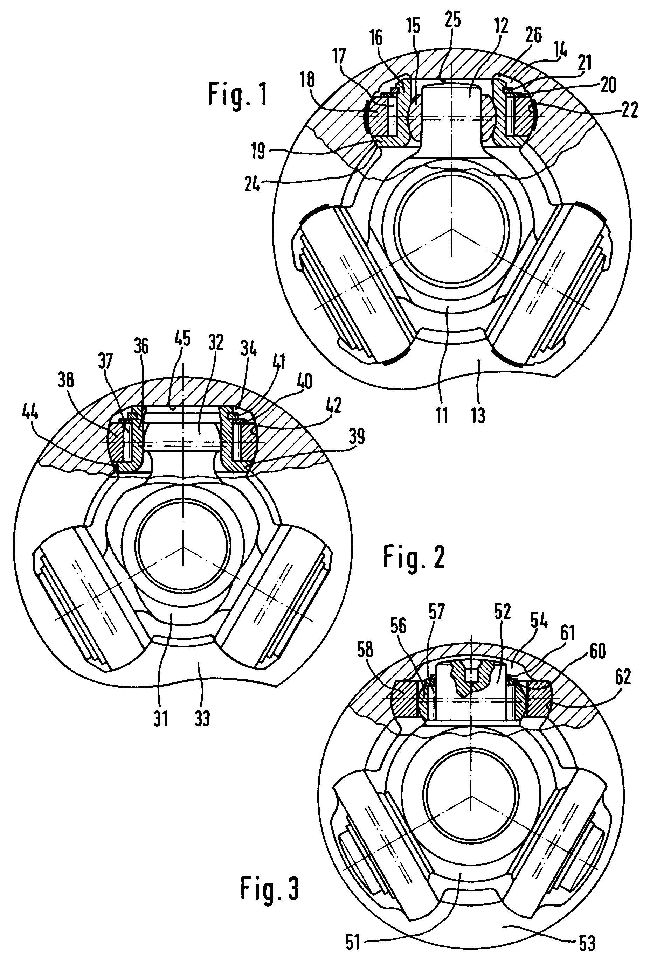

In Figur 1 ist ein im wesentlichen ringförmiges Gelenkinnenteil 11 mit umfangsverteilten radialen zylindrischen Zapfen 12 und ein Gelenkaußenteil 13 mit umfangsverteilten Ausnehmungen 14 erkennbar, wobei die Zapfen in die Ausnehmungen eingreifen und auf den Zapfen im einzelnen noch zu beschreibende Rollenanordnungen vorgesehen sind, von denen eine im Schnitt dargestellt ist. Diese besitzen jeweils einen Innenring 15 mit innenzylindrischer Innenoberfläche und außenkugeliger Außenoberfläche. Der Innenring 15 kann relativ zum Zapfen 12 in Bezug auf die Zapfenachse axial oszillieren. Auf dem Innenring 15 ist ein Rollenträger 16 gehalten, der mit einer innenkugeligen Ausnehmung schwenkbar auf der außenkugeligen Außenoberfläche des Innenrings 15 sitzt. Auf dem Rollenträger 16 ist über ein Nadellager 17 eine Rolle 18 drehbar gehalten. Das Nadellager und die Rolle werden im einzelnen von einer radial innen liegenden Schulter 19 am Rollenträger 16 und jeweils einer radial außen liegenden Scheibe 20 und einem Sicherungsring 21 gehalten. Die außenkugelige Rolle 18 läuft jeweils drehmomentabhängig auf einer der Bahnen 22 in der Ausnehmung 14 ab. Radial innerhalb der Rollenanordnung weist die Bahn auf beiden Hälften jeweils eine Schulter 24 auf. Der Rollenträger 19 kann sich an einer Abstützfläche 25 radial außerhalb der Rollenanordnung abstützen. Diese ist durch radiale Erweiterungen 26 auf jeder Hälfte der Ausnehmung 14 auf einen in Bezug zur Zapfenachse achsnahen Bereich beschränkt.

In Figur 2 ist ein im wesentlichen ringförmiges Gelenkinnenteil 31 mit daran radial ansetzenden umfangsverteilten außenkugeligen Zapfen 32 erkennbar, das in einem Gelenkaußenteil 33 mit umfangsverteilten Ausnehmungen 34 eingesetzt ist. Zwischen Zapfen und Ausnehmungen sind nachstehend im einzelnen zu beschreibende Rollenanordnungen vorgesehen, von denen eine im Schnitt dargestellt ist. Diese umfassen jeweils einen Rollenträger 36, der eine innenzylindrische Innenöffnung aufweist und damit relativ auf dem Zapfen 32 in Bezug zur Zapfenachse axial verschiebbar und bezüglich der Zapfenachse schwenkbar gehalten ist. Auf dem Rollenträger 36 ist über ein Nadellager 37 eine Rolle 38 gehalten. Nadellager 37 und Rolle 38 sind auf dem Rollenträger einerseits über eine radial innenliegende Schulter 39 sowie über jeweils eine außenliegende Scheibe 40 und einen Sicherungsring 41 gehalten. Beide Hälften der Innenausnehmung 34 weisen jeweils innenzylindrische Bahnen 42 auf, an die radial innenliegende Schultern 44 auf gegenüberliegenden Seiten und eine außenliegende Stützfläche 45, die mit dem Rollenträger 44 unter Drehmomenteinleitung zur Anlage kommen kann, anschließen.

In Figur 3 ist ein im wesentlichen ringförmiges Gelenkinnenteil 51 mit umfangsverteilten Radialzapfen 52 und ein Gelenkaußenteil 53 mit umfangsverteilten Bahnen 54 erkennbar, in die die Zapfen eingreifen. Zwischen Zapfen und Ausnehmungen sind Rollenanordnungen zu Übertragung des Drehmomentes vorgesehen, die im nachfolgenden beschrieben werden, und von denen eine im Schnitt dargestellt sind. Auf einem zylindrischen Zapfen 52 ist jeweils über ein Nadellager 57 eine Innenrolle 56 drehbar gelagert, die eine kugelige Außenoberfläche hat. Auf der Innenrolle 56 ist eine Rolle 58 mit innenzylindrischer Innenoberfläche relativ axial verschiebbar, bezogen auf die Zapfenachse, sowie schwenkbar, bezogen auf die Zapfenachse, gehalten. Diese bewegt sich in Bahnen 62 in beiden Hälften der Ausnehmung 54. Das Nadellager 57 und die Innenrolle 56 sind über eine Scheibe 60 und einen Sicherungsring 61 axial auf dem Zapfen festgelegt.

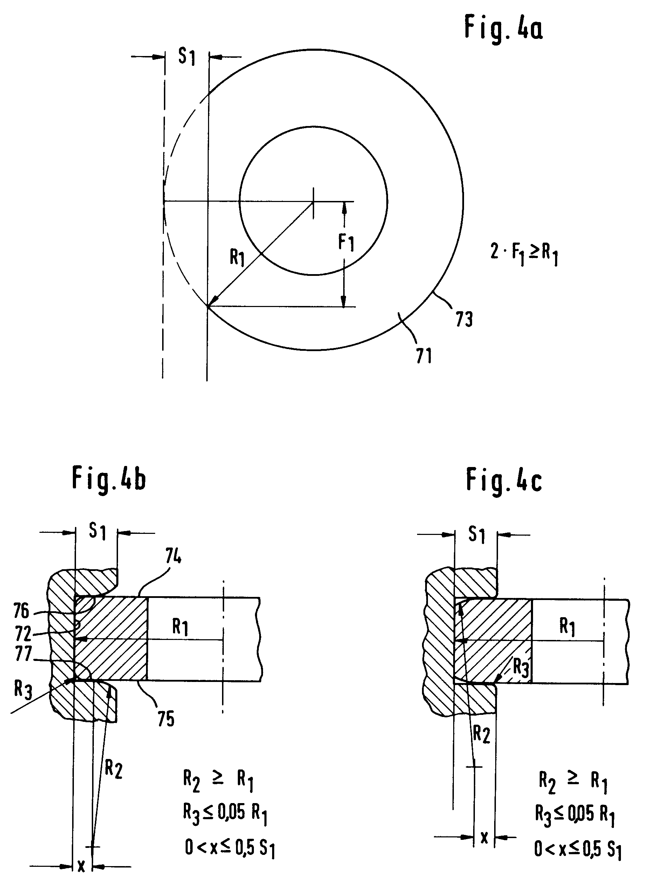

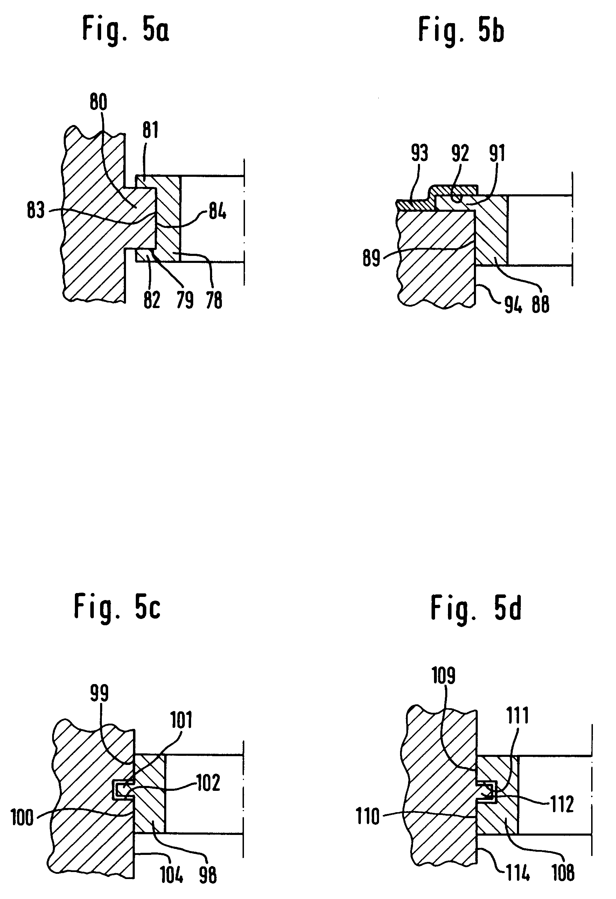

Bei den Ausführungen nach den nachstehenden Figuren 4 und 5 ist jeweils nicht erkennbar dargestellt, um welche Bauform eines gattungsgemäßen Gelenkes es sich handelt. Die Ausführungen sind bei jeder Gelenkbauform nach den Figuren 1 bis 3 anwendbar. Die entsprechenden Führungsmittel für die Rolle gegenüber dem Gelenkaußenteil sind dabei an der Rolle ausgebildet.

In Figur 4a ist eine Rolle 71 in Draufsicht im Eingriff in eine Nut 72 gezeigt, wobei in den Figuren 4b und 4c verschiedene Ausführungen der Rolle und der Nut dargestellt sind. Die Tiefe $S_1$ des Nuteingriffes soll so groß sein, daß die Länge $2F_1$ des Führungsbereichs der Nut gegenüber der Rolle zumindest halb so groß ist wie der Rollendurchmesser $2R_1$. Dies bedingt, daß $S_1 \geq R_1 \times (1 - \cos 30°)$ ist, d. h. die Rolle muß mindestens über einem Winkel von 30° in die Nut eingreifen. Die Lauffläche 73 der Rolle 71 ist im Nutgrund in Kontakt mit der Nut 72. Die Stirnflächen 74, 75 der Rolle 71 laufen mit geringem Spiel zwischen den Flanken 76, 77 der Nut.

Wie den Figuren 4b und 4c zu entnehmen, sollen entweder die Flanken 77, 77 der Nut 72 gerundet und die Stirnflächen 74, 75 der Rolle 71 im wesentlichen eben sein (Fig. 4b), oder es sollen die Flanken 76, 77 der Nut 72 im wesentlichen eben und die Stirnflächen 74, 75 der Rolle 71 zur Lauffläche 73 hin gerundet sein (Fig. 4c). Die Rundung der Kanten der Nutflanken oder der Rollenkanten soll jeweils zumindest die halben Eingriffstiefe $0,5 \, S_1$ umfassen und mit einem Radius $R_2 \geq R_1$ gerundet sein. Die Tiefe x der verbleibenden ebenen Führungsbereiche ist somit $x \leq 0,5 \, S_1$. Die Rundungen $R_3$ der jeweils im wesentlichen ebenen Stirnflächen (Fig. 4b) bzw. Bahnflanken (Fig. 4c) sollen mit $R_3 \leq 0,05 \, R_1$ bemessen sein. Die entsprechenden Beziehungen sind in der Zeichnung angegeben.

In Figur 5a ist an einer Rolle 78 eine Umfangsringnut 79 vorgesehen, die eine zylindrische Lauffläche 83 bildet und auf einer Bahn 84 auf einem Führungssteg 80 des Gelenkaußenteils abläuft. Beiderseits der Lauffläche 83 sind Führungsbunde 81, 82 ausgebildet, die - bezogen auf die Rollenachse - radiales Spiel gegenüber dem Gelenkaußenteil haben und deren innenliegende Flanken - bezogen auf die Rollenachse - axiales Spiel gegenüber den entsprechenden Flanken des Führungssteges 80 haben.

In Figur 5b ist eine Rolle 88 gezeigt, die eine zylindrische Lauffläche 89 aufweist, mit der sie auf der Bahn 94 im Gelenkaußenteil abrollt und einen stirnseitigen Führungsbund 91 hat, der in eine Ringnut 92 mit - bezogen auf die Rollenachse - axialem und radialem Spiel eingreift, wobei die Ringnut 92 durch ein verformtes Blechteil 93 am Gelenkaußenteil gebildet wird.

In Figur 5c ist eine Rolle 98 dargestellt, die zwei zylindrische Laufflächenbereiche 99, 100 und einen dazwischenliegenden Führungsbund 101 aufweist. Letzterer greift mit - bezogen auf die Rollenachse - radialem und axialem Spiel in eine Längsnut 102 im Gelenkaußenteil ein. Die Rolle läuft auf der durch die Längsnut 102 geteilten Bahn 104 ab.

In Figur 5d ist die Umkehrung zu vorstehendem dadurch gegeben, daß eine Rolle 108 zwei zylindrische Laufflächenbereiche 109, 110 aufweist, zwischen denen eine Ringnut 111 liegt, in die - bezogen auf die Rollenachse - mit axialem und radialem Spiel ein Führungssteg 112 im Gelenkaußenteil eingreift. Die Rolle läuft auf der durch den Führungssteg geteilten Bahn 114 ab.

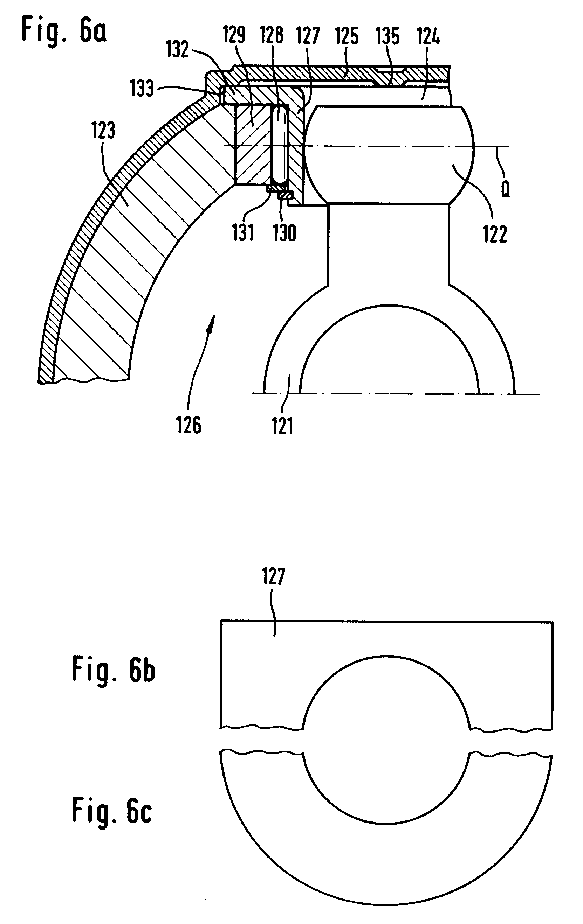

Die Ausführungen gemäß den nachstehenden Figuren 6 bis 18 zeigen jeweils ausschnittsweise ein Gelenk gemäß der Bauart nach Figur 2, ohne notwendigerweise hierauf beschränkt zu sein. Sofern Führungsmittel am Rollenträger vorgesehen sind, kann eine Anwendung bei Gelenken der in den Figuren 1 und 2 gezeigten Art erfolgen, sofern die Führungsmittel an der Rolle selber dargestellt sind, ist ebenfalls eine Anwendung auf die Bauform nach Figur 3 möglich.

In Figur 6a ist ein im wesentlichen ringförmiges Gelenkinnenteil 121 im Teilschnitt mit einem von drei daran angesetzten umfangsverteilten radialen Zapfen 122 gezeigt, der mit kugeligem Endabschnitt dargestellt ist; weiterhin ist ein im wesentlichen ringförmiges Gelenkaußenteil 123 gezeigt, in dem eine von drei umfangsverteilten, an sich nach außen offene Ausnehmungen 124 erkennbar ist, die mittels eines aufgeschobenen Hülsenteils 125 aus Blech nach außen abgedeckt sind. Eine Rollenanordnung 126 umfaßt einen Rollenträger 127 und eine darauf mittels eines Nadellagers 128 drehbar gehaltene Rolle 129. Nadellager und Rolle sind mittels Sicherungsring 130 und Scheibe 131 gegenüber dem innenzylindrischen Rollenträger 127 gehalten, in dem das kugelförmige Ende des Zapfens 122 - auf die Rollenachse bezogen - axial verlagerbar und schwenkbar geführt ist. Der Rollenträger 127 weist eine Führungsschulter 132 auf, die in eine Führungsnut 133 eingreift, die zwischen dem Hülsenteil 125 und dem Gelenkaußenteil 123 gebildet wird. Gegenüber dieser Führungsnut hat der entsprechende Bereich der Führungsschulter 132 - auf die Rollenachse bezogen - radiales und axiales Spiel. Mittig über dem Zapfen ist im Hülsenteil 125 eine Ausprägung zur Erzeugung einer Schiene 135 vorgesehen, die Kippmomente um die horizontale Achse Q des Rollenträgers 132 auffangen soll.

Wie in der darunter in Figur 6b und in Figur 6c dargestellten Draufsicht auf den Rollenträger als Einzelheit erkennbar, kann der grundsätzlich nicht drehende Rollenträger 127 im Bereich der Führungsnut geradlinig begrenzt sein (Fig. 6b) oder in Draufsicht Kreisform haben (Fig. 6c).

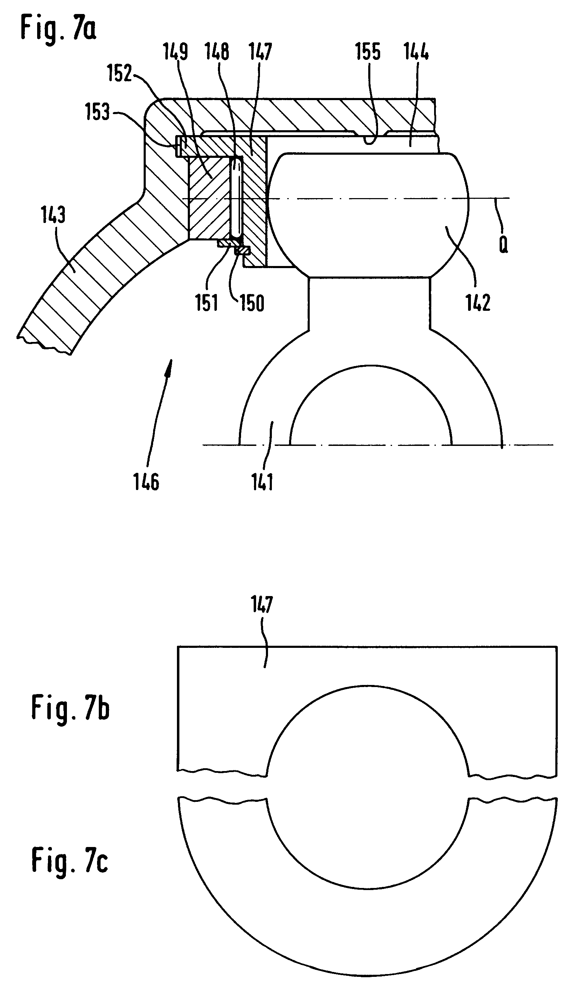

In Figur 7a ist ein im wesentlichen ringförmiges Gelenkinnenteil 141 im Teilschnitt mit einem von drei daran angesetzten umfangsverteilten radialen Zapfen 142 gezeigt, der mit kugeligem Endabschnitt dargestellt ist; weiterhin ist ein im wesentlichen ringförmiges Gelenkaußenteil 143 gezeigt, in dem eine von drei umfangsverteilte Ausnehmungen 144 erkennbar ist. Eine Rollenanordnung 146 umfaßt einen Rollenträger 147 und eine darauf mittels eines Nadellagers 148 drehbar gehaltene Rolle 149. Nadellager und Rolle sind mittels Sicherungsring 150 und Scheibe 151 gegenüber dem innenzylindrischen Rollenträger 147 gehalten, in dem das kugelförmige Ende des Zapfens 142 - auf die Rollenachse bezogen - axial verlagerbar und schwenkbar geführt ist. Der Rollenträger weist eine Führungsschulter 152 auf. Im Gelenkaußenteil 143 ist eine Führungsnut 153 ausgebildet. Gegenüber dieser Führungsnut hat der entsprechende Bereich der Führungsschulter 152 - auf die Rollenachse bezogen - radiales und axiales Spiel. Mittig über dem Zapfen ist im Gelenkaußenteil 143 eine Erhöhung zur Erzeugung einer Schiene 155 vorgesehen, die Kippmomente um die horizontale Achse Q des Rollenträgers 152 auffangen soll.

Wie in der darunter in Fig. 7b und in Fig. 7c dargestellten Draufsicht auf den Rollenträger als Einzelheit erkennbar, kann der grundsätzlich nicht drehende Rollenträger 147 im Bereich der Führungsnut geradlinig begrenzt sein (Fig. 7b) oder in Draufsicht Kreisform haben (Fig. 7c).

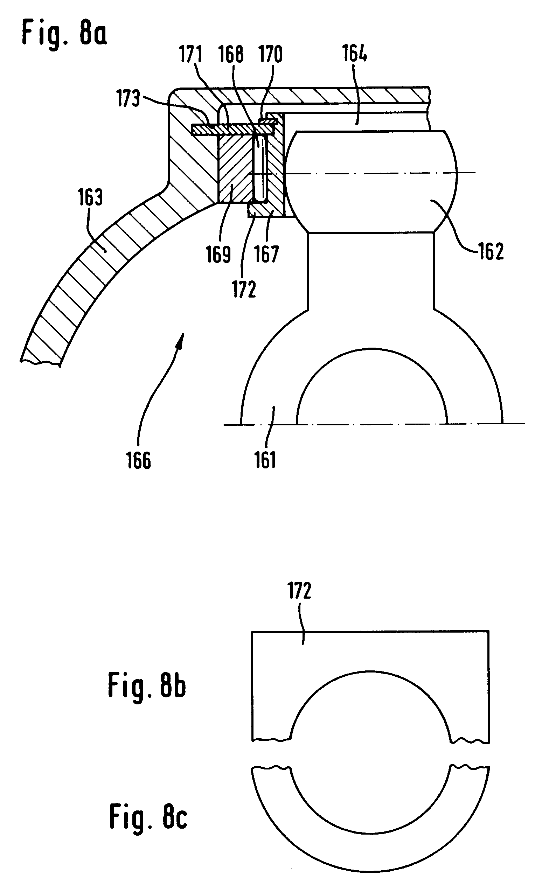

In Figur 8a ist ein im wesentlichen ringförmiges Gelenkinnenteil 161 im Teilschnitt mit einem von drei daran angesetzten umfangsverteilten radialen Zapfen 162 gezeigt, der mit kugeligem Endabschnitt dargestellt ist; weiterhin ein im wesentlichen ringförmiges Gelenkaußenteil 163 gezeigt, in dem eine von drei umfangsverteilten Ausnehmungen 164 erkennbar ist. Eine Rollenanordnung 166 umfaßt einen Rollenträger 167 und eine darauf mittels eines Nadellagers 168 drehbar gehaltene Rolle 169. Nadellager und Rolle sind mittels Sicherungsring 170 und Scheibe 171 gegenüber dem innenzylindrischen Rollenträger 167 gehalten, in dem das kugelförmige Ende des Zapfens 162 - auf die Rollenachse bezogen - axial verlagerbar und schwenkbar geführt ist. Die Scheibe 171 greift unmittelbar in eine Führungsnut 173 im Gelenkaußenteil und erstreckt sich - bezogen auf die Rollenachse - radial über den Rollendurchmesser hinaus und liegt - bezogen auf die Gelenkachse - radial außen von der Rolle. Im übrigen werden Rolle, Nadellager und Rollenträger 167 durch eine innenliegende Schulter 172 am Rollenträger zusammengehalten. Gegenüber der Führungsnut hat die Scheibe 171 - bezogen auf die Rollenachse - radiales und axiales Spiel.

Wie in der darunter in Figur 8b und in Figur 8c dargestellten Draufsicht auf die Scheibe als Einzelheit erkennbar, kann die grundsätzlich nicht drehende Scheibe 172 im Bereich der Führungsnut geradlinig begrenzt sein (Fig. 8b) oder in Draufsicht Kreisform haben (Fig. 8c).

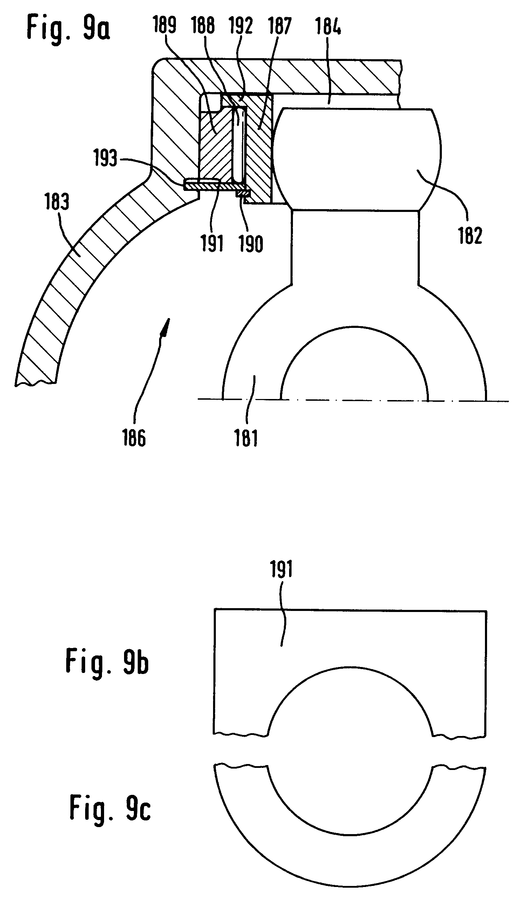

Fig. 9a ist im wesentlichen ringförmiges Gelenkinnenteil 181 im Teilschnitt mit einem von drei daran angesetzten umfangsverteilten radialen Zapfen 182 gezeigt, der mit kugeligem Endabschnitt dargestellt ist; weiterhin ist ein im wesentlichen ringförmiges Gelenkaußenteil 183 gezeigt, in dem eine von drei umfangsverteilten Ausnehmungen 184 erkennbar ist. Eine Rollenanordnung 186 umfaßt einen Rollenträger 187 und eine darauf mittels eines Nadellagers 188 drehbar gehaltene Rolle 189. Nadellager und Rolle sind mittels Sicherungsring 190 und Scheibe 191 gegenüber dem innenzylindrischen Rollenträger 187 gehalten, in dem das kugelförmige Ende des Zapfens 182 - auf die Rollenachse bezogen - axial verlagerbar und schwenkbar geführt ist. Die Scheibe 191 greift unmittelbar in eine Führungsnut 193 im Gelenkaußenteil und erstreckt sich - auf die Rollenachse bezogen - radial über den Rollendurchmesser hinaus und liegt - auf die Gelenkachse bezogen - radial innen von der Rolle. Im übrigen werden Rolle, Nadellager und Rollenträger 187 durch eine außenliegende Schulter 192 am Rollenträger zusammengehalten.

Die Bemessung des Rollenträgers 187 in Bezugs auf den axialen Abstand zwischen Scheibe 191 und Schulter 192 kann so gewählt werden, daß die Scheibe sich nur nach radial innen - auf die Gelenkachse bezogen - in der Führungsnut 193 abstützt und nach radial außen einen Freiraum aufweist, so daß sich die Rollenanordnung nach radial außen - auf die Gelenkachse bezogen - mittels der Schulter 192 abstützt. Es kann aber auch der Freiraum an der Schulter 192 gegenüber dem Gelenkaußenteil so groß sein, daß die Scheibe 191 die radiale Abstützung in beiden Richtungen übernimmt.

Wie in der darunter in Fig. 9b und in Fig. 9c dargestellten Draufsicht auf die Scheibe als Einzelheit erkennbar, kann die grundsätzlich nicht drehende Scheibe 191 im Bereich der Führungsnut geradlinig begrenzt sein (Fig. 9b) oder in Draufsicht Kreisform haben (Fig. 9c).

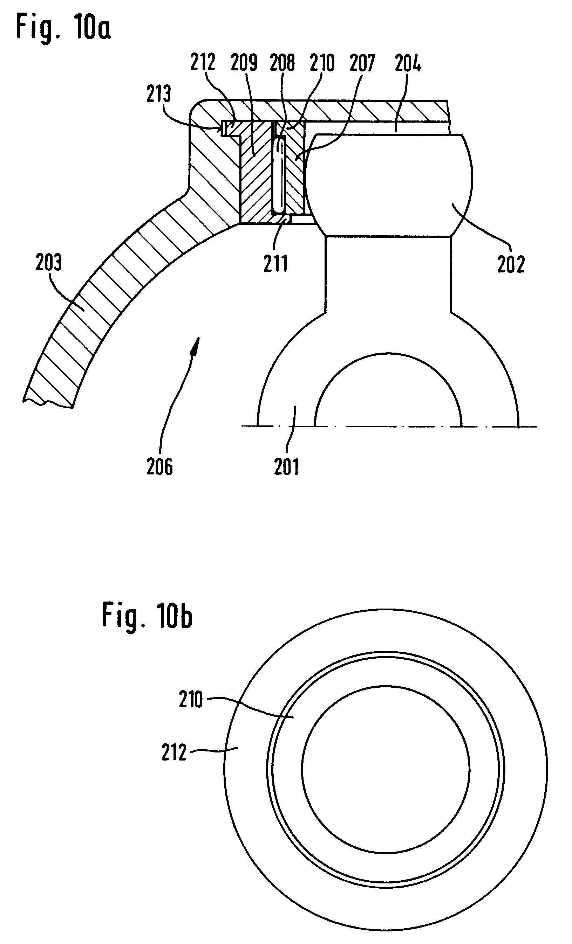

In Figur 10a ist ein ringförmiges Gelenkinnenteil 201 dargestellt, an dem einer von drei umfangsverteilten Zapfen 202 mit einem kugeligen Zapfenende erkennbar ist. Das Gelenkinnenteil 201 greift in ein Gelenkaußenteil 203 mit einer von drei den Zapfen entsprechenden umfangsverteilten Ausnehmungen 204 ein. Zwischen kugeligem Zapfenende und Ausnehmung ist eine Rollenanordnung 206 vorgesehen, die einen innenzylindrischen Rollenträger 207 und eine darauf mittels eines Nadellagers 208 drehbar gehaltene Rolle 209 umfaßt. Der Rollenträger 207 hat einen - in Bezug auf die Gelenkachse - radial äußeren - in Bezug auf die Rollenachse - nach radial außen gerichteten Bund 210. Die Rolle 209 hat einen - in Bezug auf die Gelenkachse - innenliegenden - in Bezug auf die Rollenachse - nach radial innen gerichteten Bund 211, so daß die Teile ineinandergesteckt relativ zueinander gehalten werden. Mit einer radial äußeren nach außen gerichteten Ringschulter 212 greift die Rolle 209 in eine Führungsnut 213 ein, gegenüber der sie - bezogen auf die Rollenachse - radiales und geringfügiges axiales Spiel hat. Gegenüber vom Zapfen auf den Rollenträger 207 radial nach außen übertragenen Kräften stützt sich die Rollenanordnung mit dem Bund 210 des Rollenträgers 207 unmittelbar am Boden der Ausnehmung 204 ab, während die Abstützung der Rollenanordnung nach radial innen mittels der Ringschulter 212 der Rolle 209 gegenüber der Führungsnut 213 erfolgt.

Wie in Figur 10b in der Draufsicht auf Rollenträger und Rolle als Einzelheit erkennbar, ist die unmittelbar an der Rolle 209 angesetzte Ringschulter 212 notwendigerweise in Draufsicht kreisrund.

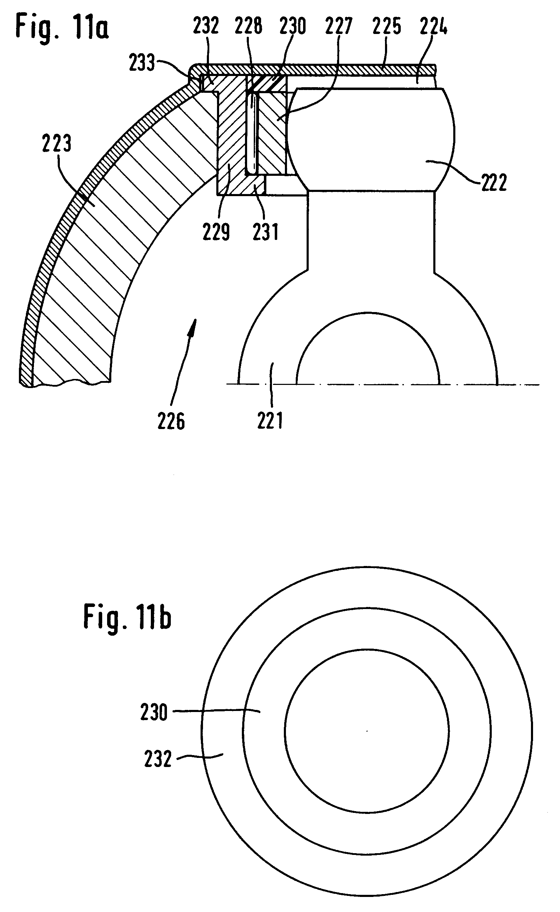

In Figur 11a ist ein ringförmiges Gelenkinnenteil 221 dargestellt, an dem einer von drei umfangsverteilten Zapfen 222 mit einem kugeligen Zapfenende erkennbar ist. Das Gelenkinnenteil 221 greift in ein Gelenkaußenteil 223, das mit einer von drei Zapfen entsprechenden umfangsverteilten an sich nach außen offene Ausnehmungen 224 dargestellt ist, ein. Die Ausnehmungen sind mittels eines auf das Gelenkaußenteil 223 aufgeschobenen Hülsenteils 225 aus Blech nach außen abgedeckt. Zwischen kugeligem Zapfenende und Ausnehmung ist eine Rollenanordnung 226 vorgesehen, die einen innenzylindrischen Rollenträger 227 und eine darauf mittels eines Nadellagers 228 drehbar gehaltene Rolle 229 umfaßt. Der Rollenträger 227 ist rein ringzylindrisch. Die Rolle 239 hat einen - in Bezug auf die Gelenkachse - radial inneren - in Bezug auf die Rollenachse - nach radial außen gerichteten Bund 231, so daß die ineinandergesteckten Teile der Rollenanordnung relativ zueinander gehalten werden. Mit einer radial äußeren nach außen gerichteten Ringschulter 232 greift die Rolle 229 in eine Führungsnut 233 ein, gegenüber der sie - bezogen auf die Rollenachse - radiales und geringfügiges axiales Spiel hat. Gegenüber vom Zapfen auf den Rollenträger 227 radial nach außen übertragenen Kräften stützt sich die Rollenanordnung 227 über eine elastische Zwischenscheibe 230 unmittelbar am Boden der Ausnehmung 224 ab, während die Abstützung der Rollenanordnung nach radial innen mittels der Ringschulter 232 der Rolle 229 gegenüber der Führungsnut erfolgt.

Wie in Fig. 11b in der Draufsicht auf Zwischenscheibe und Rolle als Einzelheit erkennbar, ist die unmittelbar an der Rolle 229 angesetzte Ringschulter 231 notwendigerweise in Draufsicht kreisrund.

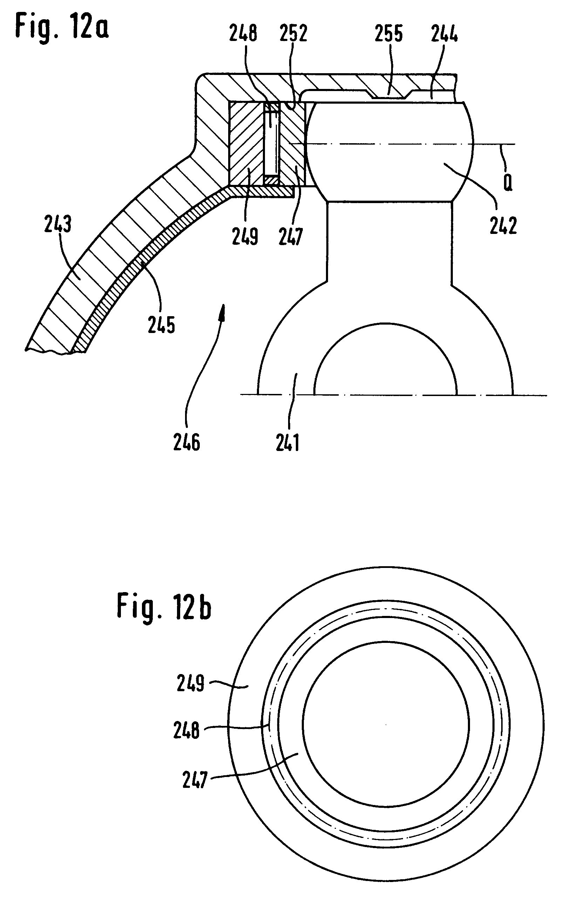

In Figur 12a ist ein im wesentlichen ringförmiges Gelenkinnenteil 241 dargestellt, an dem einer von drei umfangsverteilten Zapfen erkennbar ist, der mit einem teilkugeligen Zapfenende gezeigt ist. Das Gelenkinnenteil ist in ein Gelenkaußenteil 243, das mit einer von drei entsprechend den Zapfen umfangsverteilten Ausnehmungen 244 dargestellt ist, eingesetzt. Zwischen kugeligem Zapfenende und Ausnehmung ist eine Rollenanordnung 246 vorgesehen. In das Gelenkaußenteil ist eine im Bereich der Ausnehmung 244 teilweise axial geschlitzte Hülse 245 eingesetzt, die eine - bezogen auf die Gelenkachse - radiale Halterung für die Rollenanordnung 246 bildet. Diese umfaßt einen Rollenträger 247 mit einer innenzylindrischen Ausnehmung, in der der teilkugelige Zapfen - bezogen auf die Rollenachse - axial verlagerbar und schwenkbar geführt ist. Auf dem Rollenträger 247 ist über ein Nadellager 248 die im wesentlichen innen- und außenzylindrische Rolle 249 gelagert. Diese hat - bezogen auf die Gelenkachse - geringes radiales Spiel gegenüber dem Gelenkaußenteil 243 bzw. der Blechhülse 245, während sich der Rollenträger 252 radial nach außen an Schultern 249 und radial nach innen an den Rändern der Hülse 245 und - gegen Kippbewegungen um die querliegende Achse Q - einer mittigen Führungsschiene 255 abstützt.

Wie in Figur 12b in der Draufsicht auf die Rollenanordnung als Einzelheit gezeigt, sind Rollenträger und Rolle zylindrisch.

In Figur 13a ist ein im wesentlichen ringförmiges Gelenkinnenteil 261 dargestellt, an dem einer von drei umfangsverteilten Zapfen erkennbar ist, der mit einem teilkugeligen Zapfenende gezeigt ist. Das Gelenkinnenteil 261 ist in ein Gelenkaußenteil 263, das mit einer von drei entsprechend den Zapfen umfangsverteilten Ausnehmungen 264 dargestellt ist, eingesetzt. Zwischen kugeligen Zapfenende und Ausnehmung ist eine Rollenanordnung 266 vorgesehen. Diese umfaßt einen Rollenträger 267 mit einer innenzylindrischen Ausnehmung, in der der teilkugelige Zapfen - bezogen auf die Rollenachse - axial verlagerbar und schwenkbar geführt ist. Auf dem Rollenträger 267 ist über ein Nadellager 268 die im wesentlichen innen- und außenzylindrische Rolle 269 gelagert. Die Teile der Rollenanordnung werden von einer Scheibe 272 zusammengehalten, die - in Bezug auf die Gelenkachse - radial innen von der Rollenanordnung liegt und in eine Führungsnut 273 im Gelenkaußenteil eingreift. Die Scheibe kann am Rollenträger festgeklemmt sein. Die Scheibe 272 hat geringes radiales Spiel gegenüber dem Gelenkaußenteil, während sich der Rollenträger 267 radial nach außen an Schultern 269 gegen Kippbewegungen um die querliegende Achse Q abstützt.

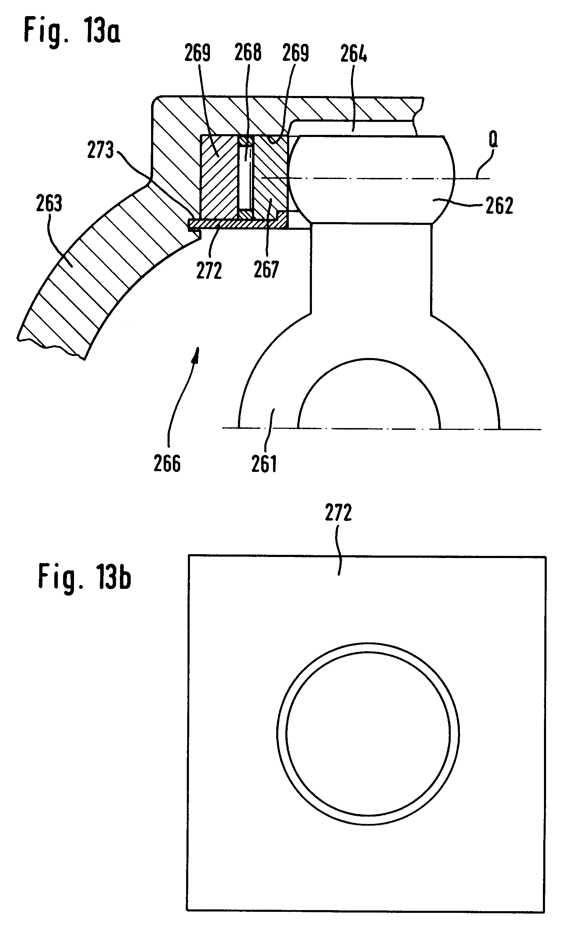

Wie in Figur 13b in der Draufsicht auf die Scheibe 272 erkennbar, ist diese im Bereich des Eingriffs mit der Führungsnut vorzugsweise geradlinig begrenzt. Eine runde Ausführung ist jedoch ebenfalls möglich.

In Figur 14a ist ein ringförmiges Gelenkinnenteil 281 dargestellt, an dem einer von drei umfangsverteilten Zapfen 282 erkennbar ist, der mit einem teilkugeligen Zapfenende gezeigt ist. Das Gelenkinnenteil 281 greift in ein Gelenkaußenteil 283, das mit einer von drei Zapfen entsprechenden umfangsverteilten Ausnehmungen 284 dargestellt ist, ein. Zwischen kugeligem Zapfenende und Ausnehmung ist eine Rollenanordnung 286 vorgesehen, die einen innenzylindrischen Rollenträger 287 und eine darauf mittels eines Nadellagers 288 drehbar gehaltene Rolle 289 umfaßt. Die Rolle 289 hat radial außen - auf die Gelenkachse bezogen - einen Innenbund 294 und radial innen - auf die Gelenkachse bezogen - eine Anordnung aus Sicherungsring 290 und Scheibe 291, die die Rollenanordnung 286 zusammenhalten. Mit einer Ringschulter 292 greift die Rolle 289 in eine Führungsnut 293 ein, gegenüber der sie - bezogen auf die Rollenachse - radiales und geringfügiges axiales Spiel hat. Gegenüber vom Zapfen auf den Rollenträger 287 radial nach außen übertragenen Kräften stützt sich die Rolle 289 mit dem Bund 294 unmittelbar am Boden der Ausnehmung 284 ab, während die Abstützung der Rollenanordnung nach radial innen mittels der Ringschulter 292 gegenüber der Führungsnut erfolgt.

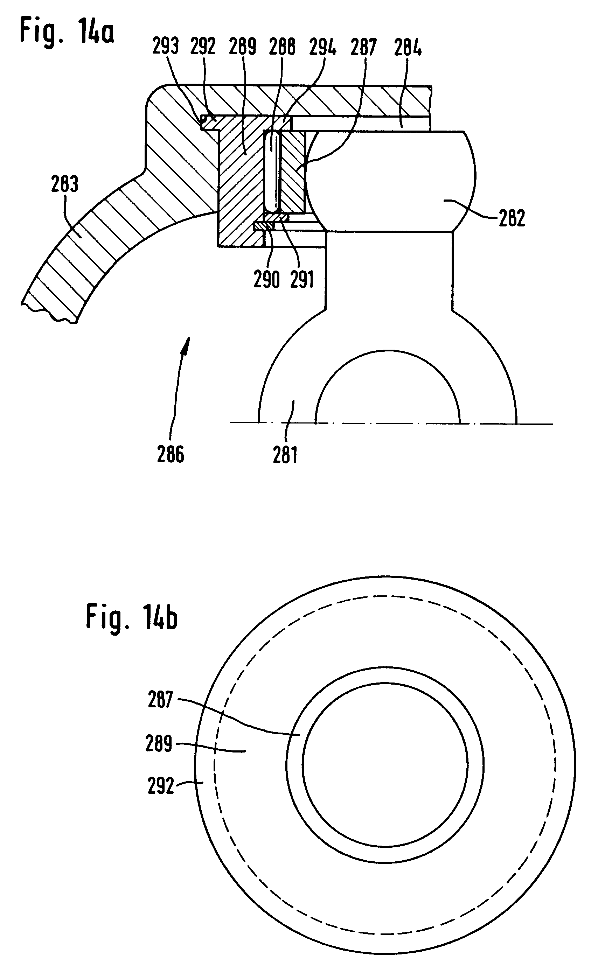

Wie in Figur 14b in der Draufsicht als Einzelheit erkennbar ist die unmittelbar an der Rolle 289 angesetzte Ringschulter 292 notwendigerweise in Draufsicht kreisrund.

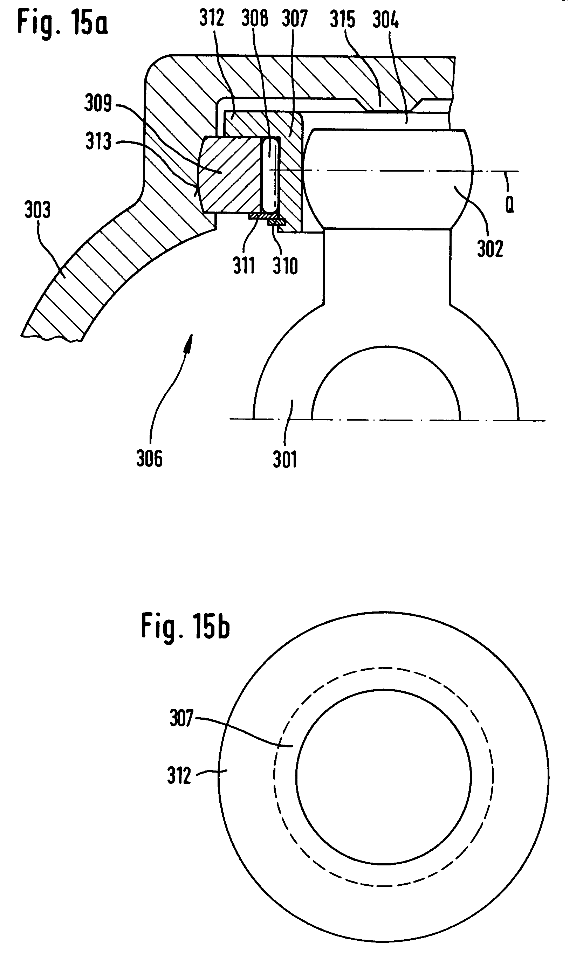

In Figur 15a ist ein im wesentlichen ringförmiges Gelenkinnenteil 301 mit einem von drei umfangsverteilten Zapfen 302 dargestellt. Das Gelenkinnenteil 301 ist in ein Gelenkaußenteil 303, das mit einer von drei umfangsverteilten der Zapfenlage entsprechenden Ausnehmungen 304 dargestellt ist, eingesetzt. Zwischen Zapfen 302 und Gelenkaußenteil 303 ist zur Übertragung des eingeleiteten Drehmomentes eine Rollenanordnung 306 vorgesehen. Der Zapfen 302 hat ein teilkugeliges Zapfenende und greift damit in eine innenzylindrische Öffnung eines Rollenträgers 307 ein, auf dem über ein Nadellager 308 eine Rolle 309 drehbar gelagert ist. Rolle und Nadellager sind über einen Sicherungsring 310 und eine Scheibe 311 im Zusammenwirken mit einer äußeren Ringschulter 312 am Rollenträger 307 axial gesichert. Die Rolle 309 greift in eine Führungsnut 313 im Gelenkaußenteil unmittelbar ein, an deren Flanken sie sich gegenüber radialen Kräften, die durch die Zapfenreibung in die Rollenanordnung eingeleitet werden, am Gelenkaußenteil 303 abstützt. Gegenüber Kippmomenten um die Achse Q stützt sich der Rollenträger 307 unmittelbar an einer Führungsschiene 315 im Gelenkaußenteil ab.

Wie in Figur 15b in der Draufsicht auf den Rollenträger 307 als Einzelheit erkennbar, ist dieser vorzugsweise einschließlich der Ringschulter 312 kreisrund. Eine Ausführung mit geradlinig begrenzten Kanten ist jedoch ebenfalls möglich.

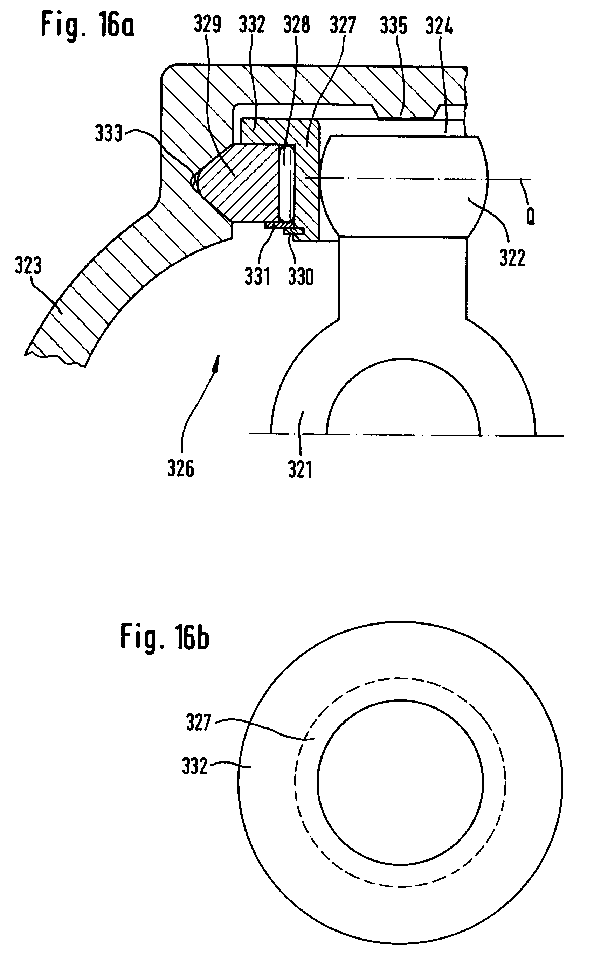

Figur 16a ist ein im wesentlichen ringförmiges Gelenkinnenteil 321 mit einem von drei umfangsverteilten Zapfen 322 dargestellt. Das Gelenkinnenteil 321 ist in ein Gelenkaußenteil 323, das mit einer von drei umfangsverteilten, der Zapfenlage entsprechenden Ausnehmungen 324 dargestellt ist, eingesetzt. Zwischen Zapfen 322 und Gelenkaußenteil 323 ist zur Übertragung des eingeleiteten Drehmomentes eine Rollenanordnung 326 vorgesehen. Der Zapfen 322 hat ein teilkugeliges Zapfenende und greift damit in eine innenzylindrische Öffnung eines Rollenträgers 327 ein, auf dem über ein Nadellager 328 eine Rolle 329 drehbar gelagert ist. Rolle und Nadellager sind über einen Sicherungsring 330 und eine Scheibe 331 im Zusammenwirken mit einer äußeren Ringschulter 332 am Rollenträger 327 axial gesichert. Die Rolle 329 greift in eine Führungsnut 333 im Gelenkaußenteil unmittelbar ein, an deren Flanken sie sich gegenüber radialen Kräften, die durch die Zapfenreibung in die Rollenanordnung eingeleitet werden, abstützt. Gegenüber Kippmomenten um die Achse Q stützt sich der Rollenträger 327 unmittelbar an einer Führungsschiene 335 im Gelenkaußenteil ab.

Wie in Figur 16b in der Draufsicht auf den Rollenträger 327 als Einzelheit erkennbar, ist dieser vorzugsweise einschließlich der Ringschulter 332 kreisrund. Eine Ausführung mit geradlinig begrenzten Kanten ist jedoch ebenfalls möglich.

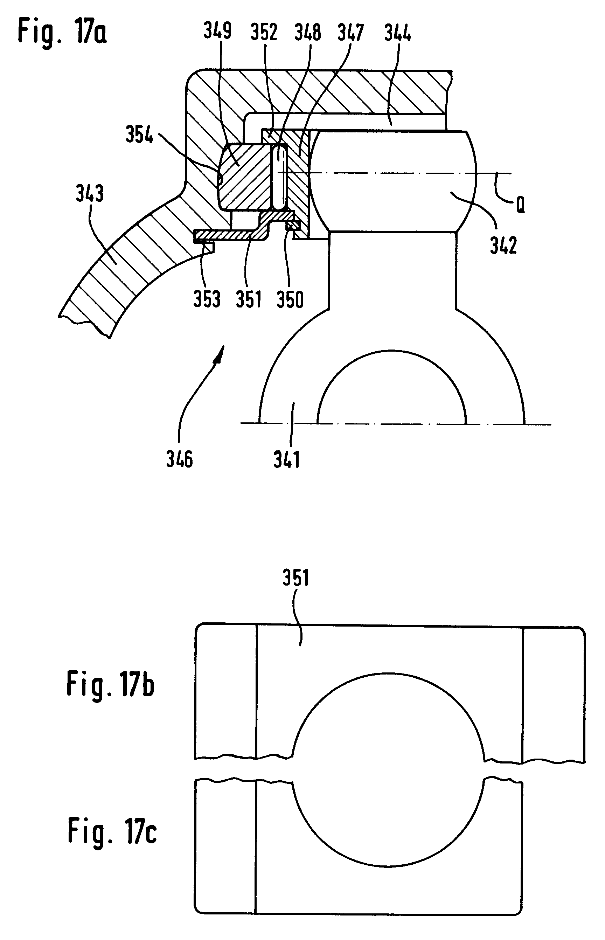

In Figur 17a ist ein im wesentlichen ringförmiges Gelenkinnenteil 341 mit einem von drei umfangsverteilten Zapfen 342 dargestellt. Das Gelenkinnenteil 341 ist in ein Gelenkaußenteil 343, das mit einer von drei umfangsverteilten, der Zapfenlage entsprechenden Ausnehmungen 344 dargestellt ist, eingesetzt. Zwischen Zapfen 342 und Gelenkaußenteil 343 ist zur Übertragung des eingleitenden Drehmomentes eine Rollenanordnung 346 vorgesehen. Der Zapfen 342 hat ein teilkugeliges Zapfenende und greift damit in einer innenzylindrische Öffnung eines Rollenträgers 347 ein, auf dem über ein Nadellager 348 eine Rolle 349 drehbar gelagert ist. Rolle und Nadellager sind über eine Scheibe 351 und einen Sicherungsring 350 im Zusammenwirken mit einer äußeren Ringschulter 352 am Rollenträger 347 axial gesichert. Die Rolle 349 greift in eine Nut 354 im Gelenkaußenteil 343 ein, während die bezüglich der Zapfenachse radial vergrößerte Scheibe 351 in eine Führungsnut 353 eingreift. Die Rolle 349 stützt sich an den Flanken der Führungsnut 354 gegenüber radialen Kräften, die durch die Zapfenreibung in die Rollenanordnung eingeleitet werden, ab. Gegenüber Kippmomenten um die Achse Q stützt sich die Scheibe 351 unmittelbar an ihrer Führungsnut 353 im Gelenkaußenteil ab.

Wie in den Figuren 17b und 17c in der Draufsicht erkennbar, kann die Scheibe 351 jeweils seitlich linear begrenzt sein, wobei nach Figur 17b die Scheibe 351 symmetrisch ist und in beidseitige Führungsnuten eingreifen kann, nach Figur 17c jedoch unsymmetrisch ist, so daß ein derartiger Eingriff nur auf der drehmomentbelasteten Seite der Ausnehmung vorgesehen ist. Alternativ hierzu kann die Scheibe auch in Draufsicht kreisrund sein.

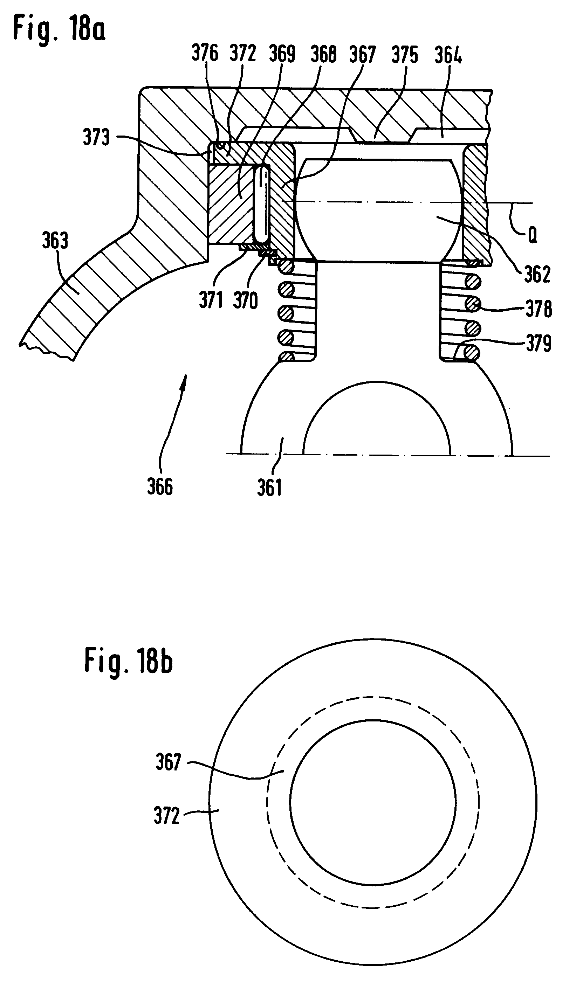

In Figur 18a ist ein Gelenkinnenteil 361 mit einem von drei umfangsverteilten Zapfen 362 dargestellt. Das Gelenkinnenteil greift in ein Gelenkaußenteil 363 von im wesentlichen ringförmiger Gestalt ein, in der eine von drei umfangsverteilten Ausnehmungen 364, in die jeweils die Zapfen eingreifen, dargestellt ist. Zwischen kugelförmigem Zapfenende und in den Ausnehmungen 364 ausgebildeten Bahnen ist eine Rollenanordnung 366 vorgesehen, die nachstehend beschrieben wird. Diese besteht aus einem Rollenträger 367 mit innenzylindrischer Ausnehmung, in der das kugelförmige Ende des Zapfens 362 radial verschiebbar und schwenkbar geführt ist. Auf den Rollenträger ist über ein Nadellager 368 eine Rolle 369 drehbar gehalten, wobei Lager und Rolle über eine Scheibe 371 und einen Sicherungsring 370 gegenüber einer Führungsschulter 372 gesichert sind. Diese stützt sich an Schultern 376 in der Ausnehmung 364 gegen radiales Verschieben nach außen sowie an einer Führungsschiene 375 gegen Kippmomente um die Achse Q quer zur Rolle ab. Radial nach innen stützt sich der Rollenträger 367 über eine Feder 378 unmittelbar an Abstützschultern 379 am ringförmigen Gelenkinnenteil 361 ab.

Wie in Figur 18b in der Draufsicht auf den Rollenträger 367 als Einzelheit erkennbar, ist dieser vorzugsweise einschließlich der Ringschulter 372 kreisrund. Eine Ausführung mit geradlinig begrenzten Kanten ist jedoch ebenfalls möglich.

Die in allen zuvorgenannten Ausführungen beschriebenen Mittel zur - bezüglich der Gelenkachse - radialen Abstützung der Rollenanordnung im Gelenkaußenteil dienen zugleich der Aufnahme von Kippmomenten um eine parallel zur Gelenkachse verlaufende Achse, die die Achse Q schneidet und senkrecht auf der Zeichnungsebene steht.

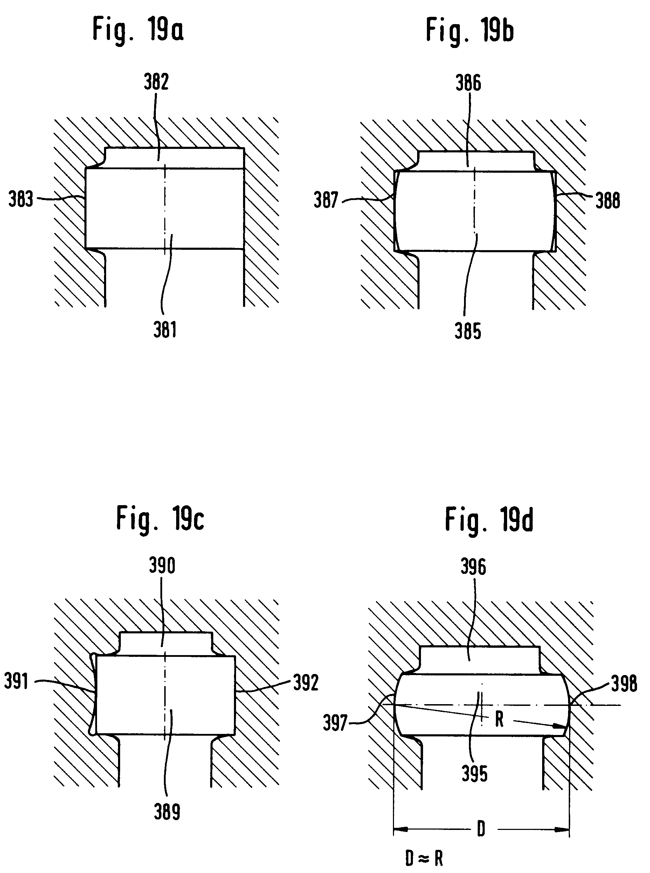

In Figur 19 sind in axialer Ansicht auf eine Ausnehmung im Gelenkaußenteil Rollen dargestellt, bei denen die unter Drehmomenteinleitung belastete Bahn in der Ausnehmung jeweils die links gezeigte sein soll.

Hierbei ist in Figur 19a eine Rolle 381 in einer Ausnehmung 382 gezeigt, die nur auf der unter Drehmoment belasteten Seite in einer Führungsnut 383 radial geführt ist, während auf der Gegenseite keine Führung vorgesehen ist.

In Figur 19b ist eine kugelige Rolle 385 gezeigt, die auf beiden Seiten der Ausnehmung 386 in im wesentlichen im Querschnitt rechteckigen Führungen 387, 388 geführt ist.

In Figur 19c ist eine im wesentlichen zylindrische Rolle 389 gezeigt, die in eine Ausnehmung 390 eingreift, wobei auf der unter Drehmoment belasteten Seite der Ausnehmung die abstützende Führung 391 im Querschnitt konvex ist, während auf der Gegenseite die entsprechende Führungsnut 392 eine reine Rechteckführungsnut darstellt.

In Figur 19d ist eine Rolle 395 gezeigt, die in eine Ausnehmung 396 eingreift, wobei die Rolle ballig ist und in entsprechend im Querschnitt konkave Führungsbahnen 397, 398 der Ausnehmung 396 eingreift. Der Krümmungsradius R der balligen Lauffläche im Querschnitt entspricht etwa dem Rollendurchmesser D (D ≈ R).

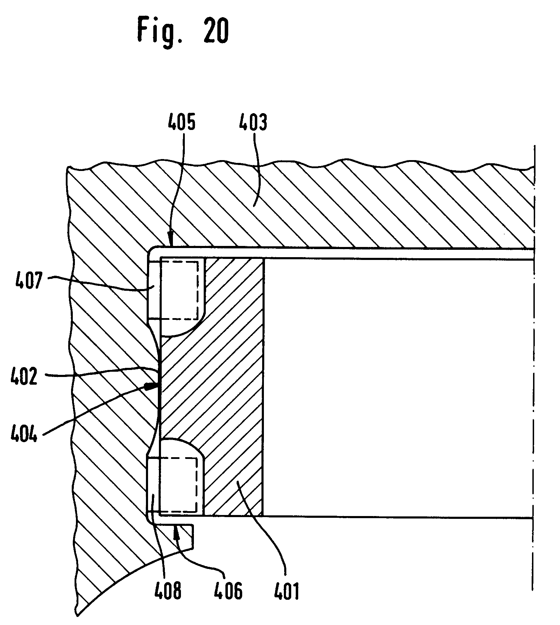

In Figur 20 ist eine Rolle 401 gezeigt, die in eine Führungsnut 402 in einem Gelenkaußenteil 403 eingreift. Die Drehmomente werden im Bereich einer mittleren Lauffläche 404 auf das Gelenkaußenteil übertragen. Eine in Bezug auf die Rollenachse axiale Abstützung erfolgt an den Seitenflächen 405, 406 der Führungsnut 405. Als Besonderheit sind Stirnradverzahnungen 407, 408 an beiden Kantenbereichen der Rolle 401 vorgesehen, die in entsprechende Längsverzahnungen entlang der Nutkanten eingreifen und damit die Rolle gleitreibungsfrei zum Abrollen zwingen. Die Lage der Verzahnungsbereiche kann von der gezeigten Ausführung abweichen, d. h. auf einen Kantenbereich beschränkt sein oder in der Rollenmitte vorgesehen sein. Durch die gezeigte doppelte Verzahnung werden zugleich Kippmomente, die auf die Rolle ausgeübt werden, aufgefangen.

## Patentansprüche

1. Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen,

dadurch gekennzeichnet,

daß die Abstützmittel durch einen Eingriff der Rolle (71) in eine Führungsnut (72) im Gelenkaußenteil gebildet werden, deren Tiefe so bemessen ist, daß die an der Rolle (71) wirksame axiale Führungslänge $2 \cdot F_1$ in der Führungsnut (72) zumindest der Hälfte des Rollendurchmessers $2 \cdot R_1$ entspricht. ($F_1 \geq 0,5 \, R_1$) (Fig. 4, 12)

2. Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen,

dadurch gekennzeichnet,

daß die Abstützmittel durch einen Eingriff zumindest eines axial verlaufenden Führungssteges (80, 112) im Gelenkaußenteil in eine Ringnut (79, 111) in der Rolle (78, 108) gebildet werden. (Fig. 5a, d)

3. Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen,

   dadurch gekennzeichnet,

   daß die Abstützmittel durch einen Eingriff zumindest einer radial über die Lauffläche der Rolle (88, 98) hinausstehenden Rollenschulter (91, 101) in eine Führungsnut (92, 102) im Gelenkaußenteil gebildet werden. (Fig. 5 b, c)

4. Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen,

   dadurch gekennzeichnet,

   daß die Abstützmittel durch einen Eingriff einer radial über die Lauffläche hinausstehenden Führungsschulter (132, 152, 212, 232, 292) an einem Rollenträger (127, 147, 207, 227, 287) in eine Führungsnut (133, 153, 213, 233, 293) im Gelenkaußenteil gebildet werden. (Fig. 6, 7, 10, 11, 14)

5. Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen,

   dadurch gekennzeichnet,

   daß die Abstützmittel durch einen Eingriff einer Führungsschulter eines an einem Rollenträger (167, 187, 267, 347) befestigten Scheibenkörpers (171, 191, 351) in eine Führungsnut (173, 193, 273, 353) im Gelenkaußenteil gebildet wird. (Fig. 8, 9, 13, 17)

6. Gelenk nach Anspruch 4 oder 5,

   dadurch gekennzeichnet,

   daß die Führungsschulter an einem nicht rotierenden Rollenträgerelement (127, 147) in radialer Draufsicht auf das Gelenk im Bereich des Nuteingriffes linear verläuft. (Fig. 6b, 7b, 8b, 9b)

7. Gelenk nach Anspruch 4 oder 5,

   dadurch gekennzeichnet,

   daß die Führungsschulter (127, 147) an einem nicht rotierenden Rollenträgerelement (127, 147) in radialer Draufsicht auf das Gelenk kreisrund ist. (Fig. 6c, 7c, 8c, 9c)

8. Gelenk nach einem der Ansprüche 1 bis 7,

   dadurch gekennzeichnet,

daß jeweils eine der einander abstützenden Schulterflächen der Führungsnut oder der Rolle bzw. des Rollenträgers zumindest auf der halben Eingriffstiefe $S_1/2$ im Querschnitt mit einem Radius $R_2$ gerundet sind, der größer oder gleich dem Rollenradius $R_1$ ist.

9. Gelenk nach einem der Ansprüche 1 bis 7,

   dadurch gekennzeichnet,

   daß eine Führungsschulter an der Rolle oder einem Rollenträgerelement - auf die Gelenkachse bezogen - radial außen von der Lauffläche der Rolle angeordnet ist.

10. Gelenk nach einem der Ansprüche 1 bis 7,

    dadurch gekennzeichnet,

    daß eine Führungsschulter an der Rolle oder einem Rollenträgerelement - auf die Gelenkachse bezogen - radial innen von der Lauffläche der Rolle angeordnet ist.

11. Gelenk nach einem der Ansprüche 1 bis 10,

    dadurch gekennzeichnet,

    daß Ausnehmungen 124, 224 im Gelenkaußenteil 123, 223 radial offen sind und unter Bildung von Führungsnuten 133, 233 für Führungsschultern an Rollen oder Rollenträgern durch eine auf das Gelenkaußenteil aufgeschobene Blechhülse 125, 225 nach außen abgeschlossen sind. (Fig. 6, 11)

12. Gelenk nach einem der Ansprüche 1 bis 11,

    dadurch gekennzeichnet,

    daß in das Gelenkaußenteil (243) eine mit den Ausnehmungen (244) zugeordneten Längsschlitzen versehene Blechhülse (245) unter Bildung von Führungsnuten oder Abstützungen für die Rollenanordnungen (246) eingesetzt ist. (Fig. 12)

13. Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen,

    dadurch gekennzeichnet,

    daß eine Führungsnut (353, 383) für eine Rolle (381) und/oder eine darin eingreifende Führungsschulter an einem Rollenträgerelement (347) oder einer Rolle nur einseitig auf der bei Drehmomenteinleitung belasteten Hälfte der Ausnehmungen im Gelenkaußenteil ausgebildet ist. (Fig. 17c, 19 a)

14. Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen,

    dadurch gekennzeichnet,

    daß in der Ausnehmung des Gelenkaußenteils jeweils axial gerichtete erste Führungsmittel (135, 155, 255, 273, 375) zur äußeren Abstützung der Rollenanordnung gegen erste Kippmomente um die Achse Q mit Abstand senkrecht zur Gelenkachse vorgesehen sind und zweite Führungsmittel (132, 133; 152, 153; 252, 269; 373) parallel zu den Bahnen zur Abstützung der Rollenanordnung gegen zweite Kippmomente um die Achse parallel zur Gelenkachse vorgesehen sind, die beide auf das gleiche Element der Rollanordnung einwirken.

(Fig. 6, 7, 12, 13, 18)

**15.** Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen,

dadurch gekennzeichnet,

daß in der Ausnehmung des Gelenkaußenteils jeweils axial gerichtete erste Führungsmittel mit dem Rollenträger unmittelbar zusammenwirken, die eine Abstützung der Rollenanordnung gegen erste Kippmomente um die Achse Q mit Abstand senkrecht zur Gelenkachse bewirken und
daß durch die Form der Bahnen definierte oder parallel zu den Bahnen verlaufende zweite Führungsmittel unmittelbar mit der Rolle zusammenwirken, die eine Abstützung der Rollenanordnung gegen zweite Kippmomente um die Achse parallel zur Gelenkachse bewirken. (Fig. 10, 11, 15, 16, 17)

**16.** Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen,

dadurch gekennzeichnet,

daß zur Abstützung für eine Rollenanordnung (366) gegenüber Kippmomenten
erste Abstützmittel vorgesehen sind, die - bezogen auf die Gelenkachse - radial außen auf die Rollenanordnung einwirken und integral oder fest verbunden mit dem Gelenkaußenteil (363) sind und
zweite Abstützmittel vorgesehen sind, die - bezogen auf die Gelenkachse - radial innen auf die Rollenanordnung einwirken und sich als Federmittel (378) ihrerseits am Gelenkinnenteil (361) abstützen. (Fig. 18)

**17.** Tripodegelenk nach einem der Ansprüche 1 bis 16,

dadurch gekennzeichnet,

daß Rollen (389) mit zylindrischer Lauffläche in Führungsbahnen (391, 392) gehalten sind, von denen jeweils ausschließlich die auf der bei Drehmomenteinleitung belasteten Seite der Ausnehmungen mit konvexer Lauffläche ausgeführt ist. (Fig. 19c)

**18.** Tripodegelenk nach einem der Ansprüche 1 bis 16,

dadurch gekennzeichnet,

daß Rollen (385) mit balliger Lauffläche in Führungsbahnen (387) gehalten sind, von denen zumindest die auf der bei Drehmomenteinleitung belasteten Seite der Ausnehmungen (386) mit ebener oder konvexer Lauffläche ausgeführt ist. (Fig. 19b)

**19.** Tripodegelenk nach einem der Ansprüche 1 bis 16,

dadurch gekennzeichnet,

daß Rollen (395) mit balliger Lauffläche vorgesehen sind, wobei der Krümmungsradius der Lauffläche im Querschnitt durch das Gelenk zumindest dem Rollendurchmesser entspricht. (Fig. 19d)

**20.** Tripodegelenk mit einem Gelenkaußenteil, das drei umfangsverteilte achsparallele Ausnehmungen aufweist, die sich in Umfangsrichtung gegenüberliegende Bahnen ausbilden, und das ein im Querschnitt sternförmiges Gelenkinnenteil mit drei umfangsverteilten Zapfen aufweist, die in die Ausnehmungen des Gelenkaußenteils eingreifen, wobei auf den Zapfen Rollenanordnungen gelagert sind, die jeweils Rollenträgermittel und eine unmittelbar auf den Bahnen ablaufende Rolle umfassen, wobei zumindest letztere relativ zum jeweiligen Zapfen axial zur Zapfenachse verschiebbar und winkelbeweglich zur Zapfenachse schwenkbar angeordnet ist, wobei Abstützmittel zwischen Rollenanordnung und Gelenkaußenteil vorgesehen sind, die auf die Rollenanordnung einwirkende Kippmomente um eine Achse parallel zur Gelenkachse und auf die Rollenanordnung einwirkende Kippmomente um eine Achse senkrecht mit Abstand zur Gelenkachse aufnehmen,

dadurch gekennzeichnet,

daß Rollen (401) mit zumindest einer Stirnverzahnung (407, 408) neben ihrer Lauffläche (404) vorgesehen sind und daß in der unter Drehmomenteinleitung belasteten Hälfte der Ausnehmungen im Gelenkaußenteil (403) axial verlaufende Zahnleisten im Eingriff mit der Stirnverzahnung ausgebildet sind. (Fig. 20)

Fig. 1

Fig. 2

Fig. 3

# Fig. 4a

$$2 \cdot F_1 \geq R_1$$

73
71

# Fig. 4b

$$R_2 \geq R_1$$
$$R_3 \leq 0{,}05\, R_1$$
$$0 < x \leq 0{,}5\, S_1$$

# Fig. 4c

$$R_2 \geq R_1$$
$$R_3 \leq 0{,}05\, R_1$$
$$0 < x \leq 0{,}5\, S_1$$

# Fig. 5a

# Fig. 5b

# Fig. 5c

# Fig. 5d

Fig. 6a

Fig. 6b

Fig. 6c

**Fig. 7a**

**Fig. 7b**

**Fig. 7c**

## Fig. 8a

## Fig. 8b

## Fig. 8c

Fig. 9a

189 188 192 187 184

193

183

191 190

182

186 181

191

Fig. 9b

Fig. 9c

## Fig. 10a

## Fig. 10b

**Fig. 11a**

**Fig. 11b**

Fig. 12a

248   252        255   244

243

249   247

245

246   241

242

a

Fig. 12b

249

248

247

EP 0 532 992 A2

Fig. 13a

269  268  269  264

273

263

272  267

262

Q

266  261

Fig. 13b

272

Fig. 14a

293 292 289 288 294 287 284

283

282

290 291

286 281

Fig. 14b

287
289
292

Fig. 15a

Fig. 15b

Fig. 16a

329 332 328 327 335 324

333

323

331 330

322

326 321

Fig. 16b

327

332

Fig. 17a

349 352 348 347 344

354

343

Q

342

353 351 350

346 341

351

Fig. 17b

Fig. 17c

Fig. 18a

376 372 369 368 367 375 364

373

363

371 370

Q

362

378

379

366 361

Fig. 18b

367

372

## Fig. 19a

382

383

381

## Fig. 19b

386

387

388

385

## Fig. 19c

390

391

392

389

## Fig. 19d

396

397

398

R

395

D

D ≈ R

## Fig. 20